(19) Europäisches Patentamt
European Patent Office
Office européen des brevets

(11) **EP 1 802 067 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(51) Int Cl.:
*H04L 27/26* (2006.01)　　　*H04M 11/06* (2006.01)

(21) Anmeldenummer: **07105843.2**

(22) Anmeldetag: **23.11.2000**

(54) **Verfahren zur Übertragung von Sendedaten durch ein Teilnehmermodem**

Method for transmitting data to be transmitted using a subscriber modem

Procede de transmission de donnees d'emission par l'intermediaire d'un modem d'abonne

(84) Benannte Vertragsstaaten:
**DE FR GB**

(30) Priorität: **02.12.1999 US 168570 P**
　　　　　　**07.08.2000 DE 10038375**

(43) Veröffentlichungstag der Anmeldung:
**27.06.2007 Patentblatt 2007/26**

(62) Dokumentnummer(n) der früheren Anmeldung(en) nach Art. 76 EPÜ:
**00985085.0 / 1 250 784**

(73) Patentinhaber: **Lantiq Deutschland GmbH**
**85579 Neubiberg (DE)**

(72) Erfinder: **Starnberger, Klaus**
**2340 Möndling (GKZ 31717) (AT)**

(74) Vertreter: **Sticht, Andreas et al**
**Kraus & Weisert**
**Patentanwälte PartGmbB**
**Thomas-Wimmer-Ring 15**
**80539 München (DE)**

(56) Entgegenhaltungen:
**WO-A-98/59426　　WO-A-99/33215**
**GB-A- 2 300 546**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 802 067 B1

**Beschreibung**

Die Erfindung betrifft ein Verfahren zur Übertragung von Sendedaten durch ein Teilnehmermodem eines Teilnehmeranschlußnetzes mit angepaßter Sendeleistung.

Teilnehmermodems dienen der Datenübertragung zwischen einem Teilnehmerendgerät, das an dem Teilnehmermodem anschließbar ist, und einer Vermittlungsstelle. Hierzu ist das Teilnehmermodem über eine Teilnehmeranschlußleitung an ein zugehöriges Vermittlungsmodem innerhalb der Vermittlungsstelle angeschlossen. Die verschiedenen Vermittlungsmodems innerhalb der Vermittlungsstelle sind an eine Schalteinrichtung, insbesondere eine Multiplexerschaltung, angeschlossen, um die verschiedenen Teilnehmeranschlußleitungen an eine breitbandige Datenübertragungsleitung durchzuschalten. Die Datenübertragung zwischen dem Teilnehmermodem und dem zugehörigen Vermittlungsmodem erfolgt bidirektional über verschiedene Übertragungsfrequenzbänder. Dabei werden die Daten von dem Teilnehmermodem zu dem zugehörigen Vermittlungsmodem über ein erstes Übertragungsfrequenzband und die Daten von dem Vermittlungsmodem zu dem zugehörigen Teilnehmermodem über ein zweites Übertragungsfrequenzband übertragen. Bei dem Teilnehmermodem und dem Vermittlungsmodem handelt es sich um sogenannte FDD-Modems (FDD: Frequency Division Duplex). Die Modems dienen dem Einsatz in öffentlichen und privaten Netzen.

Die Datenübertragung auf den Teilnehmeranschlußleitungen erfolgt mit unterschiedlichen Leitungscodierungsverfahren. Dabei wird zwischen sogenannten Vielträgerverfahren und Einträgerverfahren unterschieden. Bei den Einträgerverfahren wird zur Signalmodulation ein Trägersignal mit einer Trägerfrequenz eingesetzt. Die Einträgerverfahren oder auch SCM-Verfahren (SCM: Single Carrier Modulation)umfassen beispielsweise die QAM- oder CAP-Verfahren. Ein Beispiel für ein Vielträgerverfahren ist das DMT-Verfahren (DMT: Discrete Multi-Tone), wie es bei ADSL-Modems eingesetzt wird.

In der Druckschrift WO-A-99/33215 (D1) wird ein System und ein Verfahren zum Bestimmen der Übertragungscharakteristik eines Kommunikationskanals und für die Übertragung von Daten über den Kommunikationskanal offenbart. Dabei wird der Übertragungskanal in mehrere Subfrequenzbänder gleicher Breite unterteilt und die maximale Übertragungsleistung jedes Subfrequenzbandes mittels der sogenannten water-filling technique oder der peak constrained water-filling technique ermittelt. Als optimale Übertragungskapazität wird die höchste Kanalkapazität des entsprechenden Subfrequenzbandes ermittelt. Über jedes dieser Subfrequenzbänder wird mit optimaler Übertragungskapazität gesendet, wobei D1 nur die Vielträgerbetriebsart verwendet. Es ist jedoch nicht vorgesehen, dass die Daten entweder mittels einer Einträgerbetriebsart oder mittels einer Vielträgerbetriebsart gesendet werden.

Über die Teilnehmeranschlußleitungen werden sowohl Sprachals auch Datensignale übertragen. Die Sprach- und Datensignale werden in unterschiedlichen Frequenzbereichen übertragen. Die Datenübertragung erfolgt über einen sogenannten Hin- und Rückkanal (Downstream, Upstream), die jeweils andere Übertragungsfrequenzbänder benutzen. Der bei VDSL(very high Bit rate digital subscriber line)-Systemen benutzt Frequenzbereich liegt dabei zwischen 138 kHz und 30 MHz. Bei der Frequenzbandzuordnung für die Datenübertragung wird im einfachsten Fall jeweils ein Übertragungsfrequenzband für den Hin- und Rückkanal eingesetzt, d.h. insgesamt zwei Übertragungsfrequenzbänder. Es ist auch möglich, für beide Übertragungsrichtungen mehr als ein Übertragungsfrequenzband einzusetzen. Einträgerverfahren benutzen je Übertragungsfrequenzband nur einen Signalträger, während Vielträgerverfahren je Übertragungsfrequenzband mehrere Träger einsetzen.

Die Teilnehmeranschlußleitungen der verschiedenen Teilnehmermodems werden bei der Vermittlungsstelle zu einem aus mehreren Datenübertragungsleitungen bestehenden Kabelbündel gebündelt. Die für die Datenübertragung eingesetzten Teilnehmeranschlussleitungen sind in der Regel herkömmliche Zweidraht-Telefonleitungen, die ungeschirmt sind. Es kann daher zwischen den Teilnehmeranschlußleitungen zu einem störenden Signalübersprechen kommen.

Beim Übersprechen wird zwischen sogenanntem Fernübersprechen und Nahübersprechen unterschieden. Beim Nahübersprechen (NEXT: Near End Cross Talk) erfolgt beispielsweise ein ungewünschtes Einkoppeln des von einem ersten Vermittlungsmodem gesendeten Signals auf die Anschlußleitung eines anderen Vermittlungsmodems. Beim Fernübersprechen (FEXT: Far End Cross Talk) wird das von einem Teilnehmermodem zu dem zugehörigen Vermittlungsmodem gesendete Signal im Bereich des Kabelbündels auf eine andere Teilnehmeranschlußleitung gekoppelt und stört so das Empfangssignal eines anderen Vermittlungsmodems.

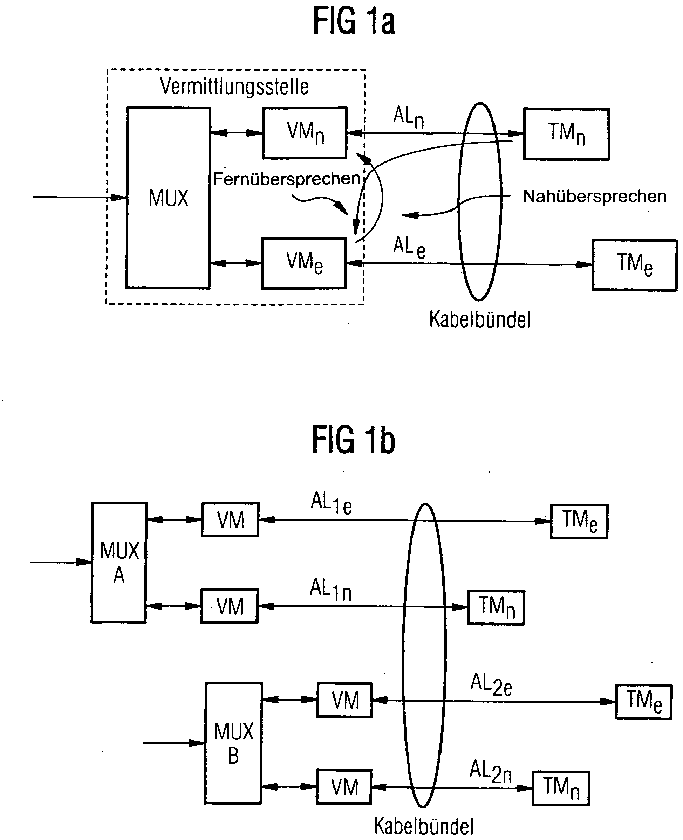

Fig. 1a zeigt ein herkömmliches Teilnehmeranschlußnetz mit einer Vermittlungsstelle, die mehrere Vermittlungsmodems VM enthält, an die jeweils Teilnehmermodems TM über Anschlußleitungen AL angeschlossen sind. Dabei sind in dem in Fig. 1 gezeigten Beispiel zwei Teilnehmermodems TM mit der Vermittlungsstelle verbunden. Das erste Teilnehmermodem $TM_n$ liegt im Nahbereich der Vermittlungsstelle, beispielsweise lediglich 300 m von der Vermittlungsstelle entfernt. Das andere Teilnehmermodem $TM_e$ liegt entfernt von der Vermittlungsstelle, beispielsweise in einer Entfernung von über 1000 m. Die Dämpfung des Datenübertragungssignals, das von einem Teilnehmermodem abgesendet wird, hängt sowohl von der Sendesignalfrequenz als auch von der Entfernung zwischen dem Vermittlungsmodem und dem Teilnehmermodem ab. Senden das entfernt gele-

gene Teilnehmermodem $TM_e$ und das nahe gelegene Teilnehmermodem $TM_n$ das Sendesignal mit der gleichen Leistung über den Rückkanal ab, kommt es im Bereich der Vermittlungsstelle zu einem Fernübersprechen von der Teilnehmeranschlußleitung $AL_n$ des nahe gelegenen Teilnehmermodems $TM_n$ auf die Teilnehmeranschlußleitung $AL_e$ des entfernt gelegenen Teilnehmermodems $TM_E$. In diesem Fall ist die Übertragung des entfernten TM stärker gestört als in jenem Fall, bei dem mehrere Modems von gleicher Entfernung aus senden. Derselbe Sachverhalt ergibt sich, wenn sich mehrere Vermittlungsstellen in unterschiedlicher Entfernung zu den Teilnehmermodems befinden (Fig. 1b). Im letztgenannten Fall ist in weiterer Folge auch das Hinkanalfrequenzband vom erfindungsgemäßen Verfahren betroffen.

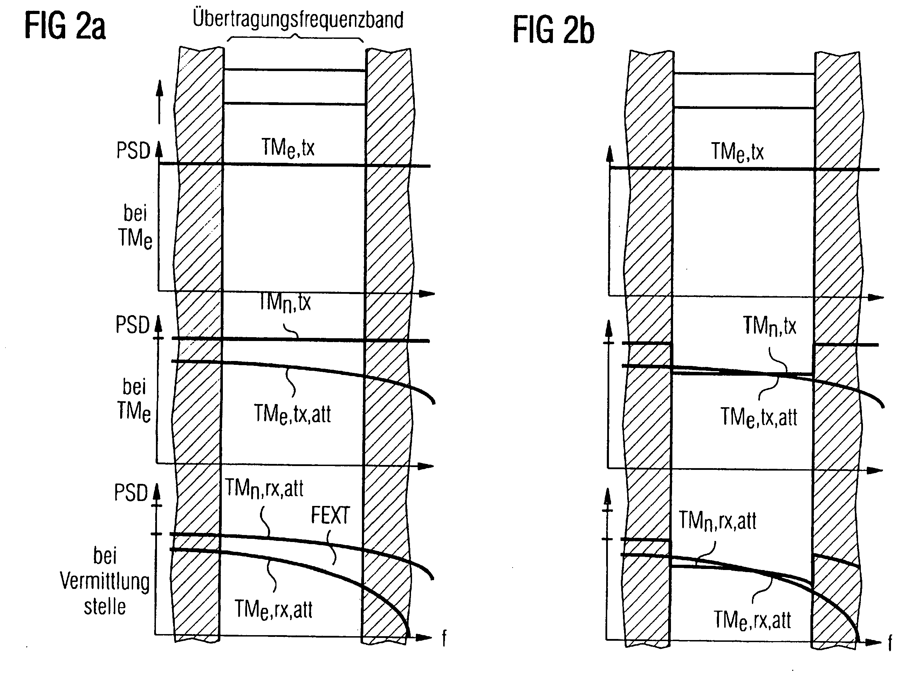

Fig. 2 zeigt den Verlauf der spektralen Leistungsdichte PSD bei dem in Fig. 1 dargestellten Teilnehmeranschlußnetz. Das Sendesignal des entfernt gelegenen Teilnehmermodems $TM_e$ weist am Ort des entfernt gelegenen Teilnehmermodems $TM_e$ ein konstantes Sendeleistungsspektrum auf. Im Bereich des nahe gelegenen Teilnehmermodems $TM_n$ ist das Übertragungsspektrum des entfernt gelegenen Modems $TM_e$ bereits gedämpft und liegt unter dem Sendeleistungsspektrum des nahe gelegenen Teilnehmermodems $TM_n$. Bei der Vermittlungsstelle sind beide Sendesignale aufgrund der Leitungsdämpfung abgedämpft, wobei allerdings das der durch die Vermittlungsstelle empfangene spektrale Leistungspegel des nahe gelegenen Teilnehmermodems $TM_n$ deutlich höher ist als der spektrale Leistungspegel des entfernt gelegenen Teilnehmermodems $TM_e$. Es kommt daher zu einem Fernübersprechen (FEXT).

Daher wird bei herkömmlichen Systemen eine Sendeleistungsreduktion bei dem nahe gelegenen Teilnehmermodem $TM_n$ durchgeführt, wie dies in Fig. 2b dargestellt ist. Diese Sendeleistungsreduktion wird auch als Power Back-off PBO bezeichnet. Hierzu wird die Sendeleistung des nahe gelegenen Teilnehmermodems $TM_n$ über das gesamte Übertragungsfrequenzband konstant abgesenkt. Hierdurch wird die Leistungsdifferenz zwischen den Empfangssignalen auf den verschiedenen Teilnehmeranschlußleitungen AL empfangenen Signalen im Bereich der Vermittlungsstelle vermindert und somit ein Fernübersprechen FEXT vermindert. Wie man in Fig. 2b erkennen kann, ist die Differenz des von dem nah gelegenen Teilnehmermodem $TM_n$ empfangenen gedämpften Datensignals und dem von dem entfernt gelegenen Teilnehmermodem $TM_e$ erhaltenen Empfangssignal im Bereich der Vermittlungsstelle geringer als bei dem in Fig. 2a gezeigten Fall ohne Sendeleistungsreduzierung.

Vor allem bei gemischtem Betrieb von Modems mit unterschiedlichen Verfahren zur Sendeleistungsreduzierung bestehen Unterschiede zwischen den verschiedenen Sendesignalleistungen, die zu einem unzulässigen Fernübersprechen führen.

Es ist daher die Aufgabe der vorliegenden Erfindung, ein Teilnehmermodem zur Übertragung von Sendedaten mit angepaßter Sendeleistung zu schaffen, bei dem das Fernübersprechen minimiert wird.

Insbesonders soll das Teilnehmermodem dazu geeignet sein, in einem Teilnehmeranschlußnetz Systeme mit unterschiedlichen Leitungscodierungsverfahren und unterschiedlichen Verfahren zur Sendeleistungsreduktion betreiben zu können.

Diese Aufgabe wird erfindungsgemäß durch ein Teilnehmermodem zur Übertragung von Sendedaten mit den im Patentanspruch 1 sowie 2 angegebenen Merkmalen gelöst.

Die Erfindung schafft ein Teilnehmermodem, separat für eine Einträgerbetriebsart aufgebaut, eingerichtet zum Anschluss an ein Teilnehmermodemnetz, das ein Vermittlungsmodem umfasst, und ferner eingerichtet zum Durchführen eines Verfahrens zur Übertragung von Sendedaten durch das Teilnehmermodem mit angepasster Sendeleistung, wobei das Verfahren die folgenden Schritte aufweist:

(a) Selektieren von mindestens einem Übertragungsfrequenzband, ÜFB;
(b) Unterteilen des selektierten Übertragungsfrequenzbandes, ÜFB, in mehrere Subfrequenzbänder, SB;
(c) Ermitteln der zu jedem Subfrequenzband, SB, zugehörigen maximalen Sendeleistung;
(d) Senden der Sendedaten mit einer angepassten Sendeleistung von dem Teilnehmermodem über eine zugehörige Teilnehmeranschlussleitung zu dem Vermittlungsmodem, wobei die Sendedaten in allen Subfrequenzbändern mit einer aus den ermittelten maximalen Sendeleistungen ausgewählten einheitlichen Sendeleistung übertragen werden,

wobei das Teilnehmermodem dazu eingerichtet ist, die geringste Sendeleistung der ermittelten maximalen Sendeleistungen der Subfrequenzbänder, SB, als die einheitliche Sendeleistung auszuwählen.

Die Erfindung schafft weiter ein Teilnehmermodem, separat für eine Vielträgerbetriebsart aufgebaut, eingerichtet zum Anschluss an ein Teilnehmermodemnetz, das ein Vermittlungsmodem umfasst, und ferner eingerichtet zum Durchführen eines Verfahrens zur Übertragung von Sendedaten durch das Teilnehmermodem mit angepasster Sendeleistung, wobei das Verfahren die folgenden Schritte aufweist:

(a) Selektieren von mindestens einem Übertragungsfrequenzband, ÜFB;
(b) Unterteilen des selektierten Übertragungsfrequenzbandes, ÜFB, in mehrere Subfrequenzbänder, SB;
(c) Ermitteln der zu jedem Subfrequenzband, SB, zugehörigen maximalen Sendeleistung;
(d) Senden der Sendedaten mit einer angepassten Sendeleistung von dem Teilnehmermodem über eine zugehörige Teilnehmeranschlussleitung zu dem Vermittlungsmodem, wobei die Sendedaten in allen Subfrequenzbändern jeweils mit der ermittelten zugehörigen maximalen Sendeleistung Sendeleistung übertragen werden.

Bei einer bevorzugten Ausführungsform des erfindungsgemässen Teilnehmermodems ist das Teilnehmermodem jeweils ein VDSL-Modem.

Bei einer bevorzugten Ausführungsform des erfindungsgemässen Teilnehmermodems ist das Teilnehmermodem zur Verwendung eines Rückkanalfrequenzbands eines xDSL-Datenübertragungssystems als das Übertragungsfrequenzband, ÜFB, eingerichtet.

Bei einer bevorzugten Ausführungsform des erfindungsgemässen Teilnehmermodems ist das Teilnehmermodem zur Verwendung eines Hinkanalfrequenzbands eines xDSL-Datenübertragungssystems als das Übertragungsfrequenzband, ÜFB, eingerichtet.

Bei einer bevorzugten Ausführungsform des erfindungsgemässen Teilnehmermodems ist das Teilnehmermodem dazu eingerichtet, die maximale Sendeleistung der Subfrequenzbänder, SB, in Abhängigkeit von der Länge oder elektrischen Länge der Teilnehmeranschlussleitung zwischen dem Teilnehmermodem und dem Vermittlungsmodem zu ermitteln.

Bei einer bevorzugten Ausführungsform des erfindungsgemässen Teilnehmermodems ist das Teilnehmermodem dazu eingerichtet, dass das Ermitteln der zu jedem Subfrequenzband, SB, zugehörigen maximalen Sendeleistung umfasst:

-   Empfangen von Konfigurationsdaten des Teilnehmeranschlussnetzes, die in Abhängigkeit von Signalrauschabständen oder Empfangsleistung erzeugt sind und die die Länge oder elektrische Länge der Teilnehmeranschlussleitungen zwischen den Teilnehmermodems und zugehörigen Vermittlungsmodems des Teilnehmeranschlussnetzes angeben,

-   Ermitteln der zugehörigen maximalen Sendeleistung für jedes Subfrequenzband, SB, durch das Teilnehmermodem aus den übertragenen Konfigurationsdaten derart, dass das Fernübersprechen, FEXT, zwischen den Teilnehmeranschlussleitungen minimiert wird.

Bei einer bevorzugten Ausführungsform des erfindungsgemässen Teilnehmermodems ist das Teilnehmermodem zur Nutzung des selektierten Übertragungsfrequenzbandes, ÜFB, von weiteren Teilnehmermodems des Teilnehmeranschlussnetzes zur Datenübertragung über zugehörige Teilnehmeranschlussleitungen eingerichtet ist.

Bei einer bevorzugten Ausführungsform des erfindungsgemässen Teilnehmermodems ist das Teilnehmermodem jeweils ein FDD-Modem.

Bei einer bevorzugten Ausführungsform des erfindungsgemässen Teilnehmermodems ist das Teilnehmermodem zur Übertragung der Konfigurationsdaten des Teilnehmeranschlussnetzes über einen vorgegebenen Steuerkanal in einem bestimmten Steuerkanalfrequenzband eingerichtet ist.

Im weiteren werden bevorzugte Ausführungsformen des erfindungsgemässen Teilnehmermodems zur Erläuterung erfindungswesentlicher Merkmale unter Bezugnahme auf die beigefügten Figuren beschrieben.

Es zeigen:

Fig. 1a, b ein Teilnehmeranschlussnetz nach dem Stand der Technik zur Erläuterung der erfindungsgemäßen Problematik;

Fig. 2 Sendeleistungsspektren für das in Fig. 1 dargestellte Teilnehmeranschlußnetz nach dem Stand der Technik;

Fig. 3 ein Teilnehmeranschlußnetz, bei dem das erfindungsgemäßen Verfahren eingesetzt wird;

Fig. 4 ein Ablaufdiagramm des erfindungsgemäßen Verfahrens zur Übertragung von Sendedaten durch ein Teilnehmermodem eines Teilnehmeranschlußnetzes mit angepaßter Sendeleistung gemäß der Erfindung;

Fig. 5 Sendeleistungsspektren der Teilnehmermodems bei Verwendung des erfindungsgemäßen Verfahrens.

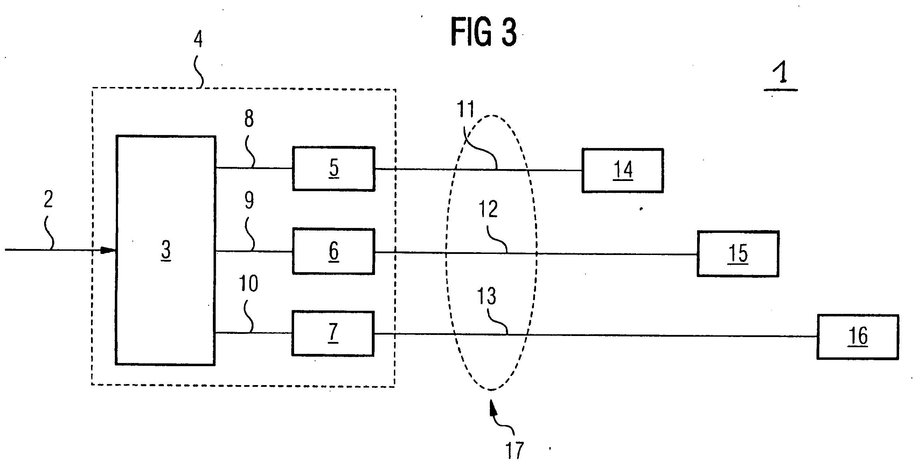

Fig. 3 zeigt ein Teilnehmeranschlußnetz 1 mit einer breitbandigen Übertragungsleitung 2, an die eine Schalteinrichtung 3, insbesondere ein Multiplexer, einer Vermittlungsstelle 4 angeschlossen ist. Die Vermittlungsstelle 4 enthält mehrere Vermittlungsmodems 5, 6, 7, die über Leitungen 8, 9, 10 mit Ausgängen der Schalteinrichtung 3 verbunden sind. Die Vermittlungsmodems sind über Teilnehmeranschlußleitungen 11, 12, 13 jeweils mit einem zugehörigen Teilnehmermodem 14, 15, 16 verbunden. An die verschiedenen Teilnehmermodems 14, 15, 16 sind Teilnehmer-Endgeräte, beispielsweise PC-Rechner, zum Senden und Empfangen von Daten anschließbar. Die Teilnehmermodems 14, 15, 16 sowie die Vermittlungsmodems 5, 6, 7 sind FDD-Modems. Bei dem in Fig. 3 gezeigten Beispiel ist das Teilnehmermodem 14 ein sehr nahe gelegenes Teilnehmermodem, dessen Teilnehmeranschlußleitung 11 beispielsweise eine Länge von lediglich 300 m besitzt. Das Teilnehmermodem 15 ist über eine Teilnehmeranschlußleitung 12 mit der Vermittlungsstelle 4 verbunden, wobei die Teilnehmeranschlußleitung 12 beispielsweise eine mittlere Leitungslänge von etwa 1000 m besitzt. Das Teilnehmermodem 16 ist beispielsweise über eine besonders lange Teilnehmeranschlußleitung 13 mit der Vermittlungsstelle 4 verbunden, wobei die Teilnehmeranschlußleitung 13 beispielsweise eine Länge von 1500 m besitzt.

Die verschiedenen Anschlussleitungen 11, 12, 13 sind im Bereich der Vermittlungsstelle 4 in einem Kabelbündel 17 gebündelt, das in Fig. 3 gestrichelt angedeutet ist. Um ein Fernübersprechen FEXT zwischen den Teilnehmeranschlussleitungen 11-13 im Bereich der Vermittlungsstelle 4 zu minimieren, werden die durch die Vermittlungsmodems 5, 6, 7 empfangenen Signalspektren durch das erfindungsgemäße Verfahren einander weitgehend angeglichen, so daß das Fernübersprechen minimiert wird. Dabei wird insbesondere die unterschiedliche Dämpfung aufgrund der unterschiedlichen Anschlußleitungslängen ausgeglichen.

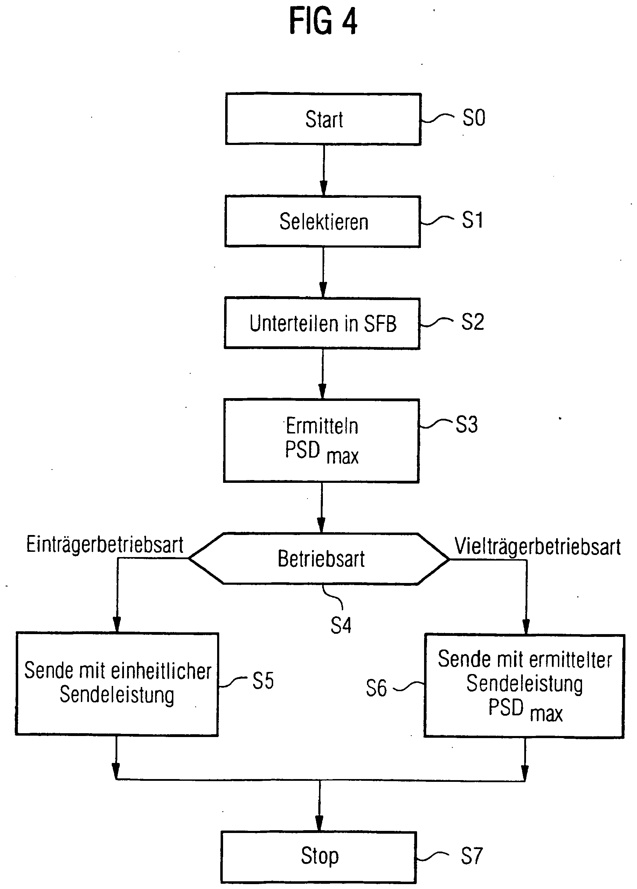

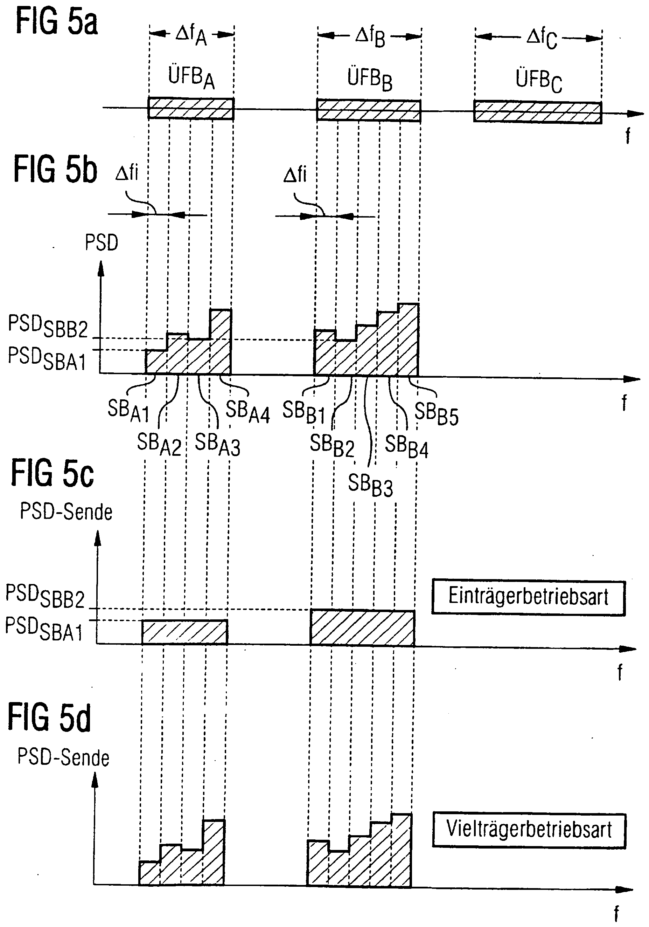

Fig. 4 zeigt ein Ablaufdiagramm des erfindungsgemäßen Verfahrens zur Übertragung von Sendedaten durch ein Teilnehmermodem 14, 15, 16 des Teilnehmeranschlußnetzes 1 mit einer angepaßten Sendeleistung zur Verringerung von Fernübersprechen. Nach dem Start des Verfahrens in Schritt S0 wird in einem Schritt S1 mindestens ein Übertragungsfrequenzband ÜFB selektiert. Das selektierte bzw. ausgewählte Übertragungsfrequenzband ÜFB ist ein Übertragungsfrequenzband, das auch von den übrigen Teilnehmermodems des Teilnehmeranschlußnetzes 1 zur Datenübertragung verwendet wird. Beispielsweise werden, wie in Fig. 5 gezeigt, in Schritt S1 aus drei möglichen Übertragungsfrequenzbändern $ÜFB_a$, $ÜFB_b$, $ÜFB_c$ die beiden Übertragungsfrequenzbänder $ÜFB_a$, $ÜFB_b$ zur Datenübertragung durch das Teilnehmermodem ausgewählt.

In einem Schritt S2 werden die Übertragungsfrequenzbänder in Subfrequenzbänder unterteilt, die jeweils eine konstante Frequenzbandbreite $\Delta f_i$ besitzen.

Es gilt:

$$\Delta f_a = n \cdot \Delta f_i;$$

$$\Delta f_b = m \cdot \Delta f_i$$

wobei $\Delta f_i$ die Frequenzbandbreite eines Subfrequenzbandes SB ist und vorzugsweise durch den schaltungstechnischen Aufbau des Teilnehmermodems bestimmt ist.

Bei einer bevorzugten Ausführungsform des erfindungsgemäßen Verfahrens ist die Frequenzbandbreite $\Delta f_i$ eines Subfrequenzbandes SB einstellbar.

Die Anzahl n, m der Subfrequenzbänder SB wird entweder durch den schaltungstechnischen Aufbau des Teilnehmermodems festgelegt oder ist einstellbar.

In einem Schritt S3 wird die zu jedem Subfrequenzband SB zugehörige maximale Sendeleistung bzw. die maximale spektrale Leistungsdichte $PSDmax_i$ ermittelt. Das Vermittlungsmodem 5, 6, 7 ermittelt jeweils die Länge bzw. elektrische Länge der zugehörigen Teilnehmeranschlussleitung 11, 12, 13.

Dies geschieht über eine Messung der Empfangsleistung am Empfänger des Vermittlungsmodems. Dazu sendet das Teilnehmermodem mit einer vordefinierten Sendeleistung, die Teilnehmer- und Vermittlungsmodem bekannt ist. Das Sendesignal wird von der Teilnehmeranschlussleitung 11, 12, 13 frequenzabhängig gedämpft. Mit einer Messeinrichtung wird die Empfangsleistung des Übertragungsfrequenzbandes oder -subbandes bestimmt. Aus der Differenz der Sende- und Empfangsleistung errechnet sich die Einfügedämpfung, die die elektrische Länge des Teilnehmeranschlusses 11, 12, 13 widerspiegelt. Für die Bestimmung der physikalischen Länge ist die Kenntnis der elektrischen Eigenschaften des verwendeten Kabels oder eine einfache Längenangabe vorausgesetzt.

Bei einer bevorzugten Ausführungsform des erfindungsgemäßen Verfahrens wird aus der Differenz von erwarteter Empfangssignalleistung und tatsächlich empfangener und verrauschter Empfangssignalleistung der Signalrauschabstand gebildet, wobei der Signalrauschabstand über das gesamte Übertragungsfrequenzband $ÜFB_i$ gebildet wird,
wobei der Signalrauschabstand in sequentieller Weise über alle oder manche Subfrequenzbänder $SB_i$ gebildet wird, wobei der Signalrauschabstand gleichzeitig über alle oder manche Subfrequenzbänder $SB_i$ gebildet wird.

Die Vermittlungsstelle 4 erzeugt aus den ermittelten Einfügedämpfungen oder den ermittelten Einfügedämpfungen in Kombination mit den Signalrauschabständen der Übertragungsfrequenzbänder oder -subfrequenzbänder Konfigurationsdaten des Teilnehmeranschlussnetzes 1 und überträgt die erzeugten Konfigurationsdaten von dem Vermittlungsmodem 5, 6, 7 über die zugehörige Teilnehmeranschlussleitung 11, 12, 13 an das jeweilige Teilnehmermodem 14, 15, 16. Aus den erhaltenen Konfigurationsdaten ermittelt das jeweilige Teilnehmermodem 14, 15, 16 die jeweils zulässige maximale Sendeleistung $PSDmax_i$ für jedes Subfrequenzband $SB_i$. Dabei wird die maximale Sendeleistung $PSDmax_i$ der jeweiligen Subbänder $SB_i$ derart berechnet, dass das Fernübersprechen FEXT zwischen den Teilnehmeranschlussleitungen 11, 12, 13 im Bereich des Kabelbündels 17 minimal ist.

Figur 5b zeigt ein Beispiel für ein durch ein Teilnehmermodem ermitteltes Signalleistungsspektrum, in dem die maximal zulässigen Sendeleistungen $PSDmax_i$ für die jeweiligen Subbänder $SB_i$ in den beiden Übertragungsfrequenzbändern $ÜFB_a$ $ÜFB_b$ angegeben sind.

In einem Schritt S4 wird entschieden, in welcher Betriebsart sich das Teilnehmermodem befindet. Die Betriebsart bzw. der Betriebsmodus des Teilnehmermodems ist vorzugsweise extern einstellbar, beispielsweise durch eine an dem jeweiligen Teilnehmermodem vorgesehene Schalteinrichtung.

Bei einer bevorzugten Ausführungsform des erfindungsgemäßen Verfahrens werden für jede Betriebsart bzw. jeden Betriebsmodus separat aufgebaute Modems eingesetzt.

Das Teilnehmermodem kann entweder in einer Einträgerbetriebsart oder in einer Vielträgerbetriebsart die Sendedaten an das zugehörige -Vermittlungsmodem senden. In der Einträgerbetriebsart werden die Sendedaten auf einem Träger moduliert, während in der Vielträgerbetriebsart Sendedaten auf mehrere Träger moduliert werden.

Erkennt das Teilnehmermodem im Schritt S4, daß die Einträgerbetriebsart eingestellt ist, werden in einem Schritt S5 die Sendedaten in allen Subfrequenzbändern SB mit einer bestimmten einheitlichen Sendeleistung der ermittelten maximalen Sendeleistungen PSD-max$_i$ übertragen. Dies ist schematisch in Fig. 5c dargestellt. Bei der einheitlichen Sendeleistung handelt es sich vorzugsweise um die geringste Sendeleistung der ermittelten maximalen Sendeleistungen PSDmax$_i$ der Subfrequenzbänder SB$_i$. Mit dieser Sendeleistung wird in jedem Fall sichergestellt, daß minimal Fernübersprechen im Bereich des Kabelbündels 17 auftritt. Die im Schritt S5 gesendete einheitliche Sendeleistung kann bei einer alternativen Ausführungsform auch über der geringsten Sendeleistung der ermittelten maximalen Sendeleistungen liegen, wobei bewusst etwas Fernübersprechen in Kauf genommen wird.

Wie man in Fig. 5 erkennen kann, ist die geringste Sendeleistung der ermittelten maximalen Sendeleistungen PSDmax$_i$ bei dem in Fig. 5 gezeigten Beispiel die maximal zulässige Sendeleistung PSD$_{SBA1}$ im Subfrequenzband SBA$_1$ in dem Übertragungsfrequenzband ÜFB$_A$. Die geringste Sendeleistung der ermittelten maximalen Sendeleistung der Subfrequenzbänder SB$_B$ innerhalb des Übertragungsfrequenzbandes ÜFB$_B$ ist bei dem in Fig. 5b gezeigten Beispiel die maximal zulässige Sendeleistung PSD$_{SBB2}$ in dem Subfrequenzband SBB$_2$.

Die Sendedaten werden bei eingestellter Einträgerbetriebsart im Übertragungsfrequenzband ÜFB$_A$ mit der maximal zulässigen Sendeleistung des Subfrequenzbandes SB$_{A1}$ gesendet, und in dem Übertragungsfrequenzband ÜFB$_B$ mit der maximal zulässigen Sendeleistung des Subfrequenzbandes SB$_{B2}$. Hierdurch wird ein Fernübersprechen FEXT im Bereich der Vermittlungsstelle 4 in jedem Fall unterdrückt. Die Minimierung des Fernübersprechens FEXT führt zu geringeren Störleistungen und somit zu höheren Signalrauschabständen und die Datenübertragungskanalkapazität erhöht. Hierdurch wird die Datenübertragungsrate bzw. die mögliche zulässige Entfernung zwischen dem Teilnehmermodem und dem Vermittlungsmodem erheblich gesteigert.

Erkennt das Teilnehmermodem im Schritt S4, daß die Vielträgerbetriebsart eingestellt ist, werden im Schritt S6 die Sendedaten in den Subfrequenzbändern SB jeweils mit der ermittelten zugehörigen maximalen Sendeleistung PSDmax$_i$ übertragen. Dies ist in Fig. 5d dargestellt. Wie man aus dem Vergleich in Fig. 5b und 5d erkennen kann, entspricht die Sendeleistung PSD-sende in der Vielträgerbetriebsart dem in Fig. 5b dargestellten Spektrum. Bei der Vielträgerbetriebsart werden für jedes selektierte Übertragungsfrequenzband ÜFB mehrere Signalträger zur Signalmodulation eingesetzt. Jedes Subfrequenzband SB weist einen eigenen Signalmodulationsträger auf. Das Vielträger-Modulationsverfahren ist beispielsweise ein DMT-Verfahren mit einer Vielzahl von Signalträgerfrequenzen.

Nach dem Senden der Sendedaten wird das Verfahren im Schritt S7 beendet.

Bei dem erfindungsgemäßen Verfahren wird durch die Unterteilung in Subbänder SB eine genauere Anpassung der Sendesignalleistungen der Teilnehmermodems 14, 15, 16 zur Reduktion von Fernübersprechen FEXT erreicht. Bei dem erfindungsgemäßen Verfahren ist ferner sowohl ein Einträgerbetrieb mit einem Einträger-Modulationsverfahren und ein Vielträgerbetrieb mit einem Vielträger-Modulationsverfahren möglich. Die spektrale Kompatibilität zwischen Übertragungssystemen unterschiedlicher Bauart in einem gemeinsamen Kabelbündel wird durch das erfindungsgemäße Verfahren gewährleistet. Das erfindungsgemäße Verfahren eignet sich insbesondere für den Einsatz bei xDSL-Modems, insbesondere VDSL-Modems.

Bezugszeichenliste

| | |
|---|---|
| 1 | Teilnehmeranschlussnetz |
| 2 | Datenübertragungsleitung |
| 3 | Schalteinrichtung |
| 4 | Vermittlungsstelle |
| 5, 6, 7 | Vermittlungsmodems |
| 8, 9, 10 | Leitungen |
| 11, 12, 13 | Teilnehmeranschlussleitungen |
| 14, 15, 16 | Teilnehmermodems |
| 17 | Kabelbündel |

**Patentansprüche**

1. Teilnehmermodem (14, 15, 16),
separat für eine Einträgerbetriebsart aufgebaut, eingerichtet zum Anschluss an ein Teilnehmermodemnetz (1), das ein Vermittlungsmodem (5, 6, 7) umfasst, und ferner eingerichtet zum Durchführen eines Verfahrens zur Übertragung von Sendedaten durch das Teilnehmermodem (14, 15, 16) mit angepasster Sendeleistung, wobei das Verfahren die folgenden Schritte aufweist:

(a) Selektieren (S1) von mindestens einem Übertragungsfrequenzband, ÜFB;
(b) Unterteilen (S2) des selektierten Übertragungsfrequenzbandes, ÜFB, in mehrere Subfrequenzbänder, SB;
(c) Ermitteln (S3) der zu jedem Subfrequenzband, SB, zugehörigen maximalen Sendeleistung
(d) Senden (S5, S6) der Sendedaten mit einer angepassten Sendeleistung von dem Teilnehmermodem (14, 15, 16) über eine zugehörige Teilnehmeranschlussleitung (11, 12, 13) zu dem Vermittlungsmodem (5, 6, 7),

wobei die Sendedaten in allen Subfrequenzbändern mit einer aus den ermittelten maximalen Sendeleistungen ausgewählten einheitlichen Sendeleistung übertragen werden (S5), wobei das Teilnehmermodem dazu eingerichtet ist, die geringste Sendeleistung der ermittelten maximalen Sendeleistungen der Subfrequenzbänder, SB, als die einheitliche Sendeleistung auszuwählen.

2.  Teilnehmermodem (14, 15, 16),
    separat für eine Vielträgerbetriebsart aufgebaut, eingerichtet zum Anschluss an ein Teilnehmermodemnetz (1), das ein Vermittlungsmodem (5, 6, 7) umfasst, und ferner eingerichtet zum Durchführen eines Verfahrens zur Übertragung von Sendedaten durch das Teilnehmermodem (14, 15, 16) mit angepasster Sendeleistung, wobei das Verfahren die folgenden Schritte aufweist:

    (a) Selektieren (S1) von mindestens einem Übertragungsfrequenzband, ÜFB;
    (b) Unterteilen (S2) des selektierten Übertragungsfrequenzbandes, ÜFB, in mehrere Subfrequenzbänder, SB;
    (c) Ermitteln (S3) der zu jedem Subfrequenzband, SB, zugehörigen maximalen Sendeleistung
    (d) Senden (S5, S6) der Sendedaten mit einer angepassten Sendeleistung von dem Teilnehmermodem (14, 15, 16) über eine zugehörige Teilnehmeranschlussleitung (11, 12, 13) zu dem Vermittlungsmodem (5, 6, 7),

    wobei die Sendedaten in den Subfrequenzbändern jeweils mit der ermittelten zugehörigen maximalen Sendeleistung übertragen werden (S6).

3.  Teilnehmermodem nach Anspruch 2,
    **dadurch gekennzeichnet, dass** das Teilnehmermodem (14, 15, 16) jeweils ein VDSL-Modem ist.

4.  Teilnehmermodem nach einem der Ansprüche 2 und 3,
    dadurch gekennezeichnet, dass das Teilnehmermodem zur Verwendung eines Rückkanalfrequenzbands eines xDSL-Datenübertragungssystems als das Übertragungsfrequenzband, ÜFB, eingerichtet ist.

5.  Teilnehmermodem nach einem der Ansprüche 2 bis 4,
    **dadurch gekennzeichnet, dass** das Teilnehmermodem zur Verwendung eines Hinkanalfrequenzbands eines xDSL-Datenübertragungssystem als das Übertragungsfrequenzband, ÜFB, eingerichtet ist.

6.  Teilnehmermodem nach einem der vorstehenden Ansprüche, **dadurch gekennzeichnet, dass** das Teilnehmermodem dazu eingerichtet ist, die maximale Sendeleistung der Subfrequenzbänder, SB, in Abhängigkeit von der Länge oder elektrischen Länge der Teilnehmeranschlussleitung (11, 12, 13) zwischen dem Teilnehmermodem (14, 15, 16) und dem Vermittlungsmodem (5, 6, 7) zu ermitteln.

7.  Teilnehmermodem nach einem der vorstehenden Ansprüche, **dadurch gekennzeichnet, dass** das Teilnehmermodem dazu eingerichtet ist, dass das Ermitteln der zu jedem Subfrequenzband, SB, zugehörigen maximalen Sendeleistung umfasst:

    Empfangen von Konfigurationsdaten des Teilnehmeranschlussnetzes (1), die in Abhängigkeit von Signalrauschabständen oder Empfangsleistung erzeugt sind und die die Länge oder elektrische Länge der Teilnehmeranschlussleitungen (11, 12, 13) zwischen den Teilnehmermodems (14, 15, 16) und zugehörigen Vermittlungsmodems (5, 6, 7) des Teilnehmeranschlussnetzes (1) angeben,

    - Ermitteln der zugehörigen maximalen Sendeleistung für jedes Subfrequenzband, SB, durch das Teilnehmermodem (14, 15, 16) aus den übertragenen Konfigurationsdaten derart, dass das Fernübersprechen, FEXT, zwischen den Teilnehmeranschlussleitungen (11, 12, 13) minimiert wird.

8.  Teilnehmermodem nach einem der vorstehenden Ansprüche, **dadurch gekennzeichnet, dass** zur Nutzung des selektierten Übertragungsfrequenzbandes, ÜFB, von weiteren Teilnehmermodems des Teilnehmeranschlussnetzes (1) zur Datenübertragung über zugehörige Teilnehmeranschlussleitungen eingerichtet ist.

9.  Teilnehmermodem nach einem der vorstehenden Ansprüche, **dadurch gekennzeichnet, dass** das Teilnehmermodem (14, 15, 16) jeweils ein FDD-Modem ist.

10. Teilnehmermodem nach einem der vorstehenden Ansprüche, **dadurch gekennzeichnet, dass** das Teilnehmermodem zur Übertragung der Konfigurationsdaten des Teilnehmeranschlussnetzes (1) über einen vorgegebenen Steuerkanal in einem bestimmten Steuerkanalfrequenzband eingerichtet ist.

**Claims**

1. Subscriber modem (14, 15, 16)
designed separately for a single-carrier mode of operation,
set up for connection to a subscriber modem network (1) that comprises a switch modem (5, 6, 7), and further set up for performing a method for transmitting transmission data using the subscriber modem (14, 15, 16) at adapted transmission power, wherein the method has the following steps:

   (a) selection (S1) of at least one transmission frequency band, ÜFB;
   (b) division (S2) of the selected transmission frequency band, ÜFB, into multiple frequency subbands, SB;
   (c) ascertainment (S3) of the maximum transmission power associated with each frequency subband, SB;
   (d) sending (S5, S6) of the transmission data at an adapted transmission power from the subscriber modem (14, 15, 16) via an associated subscriber line (11, 12, 13) to the switch modem (5, 6, 7),

   wherein the transmission data are transmitted (S5) at a standard transmission power, selected from the ascertained maximum transmission powers, in all frequency subbands,
   the subscriber modem being set up to select the lowest transmission power of the ascertained maximum transmission powers of the frequency subbands, SB, as the standard transmission power.

2. Subscriber modem (14, 15, 16),
designed separately for a multicarrier mode of operation,
set up for connection to a subscriber modem network (1) that comprises a switch modem (5, 6, 7), and further set up for performing a method for transmitting transmission data using the subscriber modem (14, 15, 16) at adapted transmission power, wherein the method has the following steps:

   (a) selection (S1) of at least one transmission frequency band, ÜFB;
   (b) division (S2) of the selected transmission frequency band, ÜFB, into multiple frequency subbands;
   (c) ascertainment (S3) of the maximum transmission power associated with each frequency subband, SB;
   (d) sending (S5, S6) of the transmission data at an adapted transmission power from the subscriber modem (14, 15, 16) via an associated subscriber line (11, 12, 13) to the switch modem (5, 6, 7),

   the transmission data being transmitted (S6) in the frequency subbands at the ascertained associated maximum transmission power in each case.

3. Subscriber modem according to Claim 2, **characterized in that** the subscriber modem (14, 15, 16) is a VDSL modem in each case.

4. Subscriber modem according to either of Claims 2 and 3,
**characterized in that** the subscriber modem is set up to use a return channel frequency band of an xDSL data transmission system as the transmission frequency band, ÜFB.

5. Subscriber modem according to one of Claims 2 to 4, **characterized in that** the subscriber modem is set up to use a forward channel frequency band of an xDSL data transmission system as the transmission frequency band, ÜFB.

6. Subscriber modem according to one of the preceding claims,
**characterized in that** the subscriber modem is set up to ascertain the maximum transmission power of the frequency subbands, SB, on the basis of the length or electrical length of the subscriber line (11, 12, 13) between the subscriber modem (14, 15, 16) and the switch modem (5, 6, 7).

7. Subscriber modem according to one of the preceding claims, **characterized in that** the subscriber modem is set up such that the ascertainment of the maximum transmission power associated with each frequency subband, SB, comprises:

   - reception of the configuration data for the subscriber access network (1) that are produced on the basis of signal-to-noise ratios or reception power and that indicate the length or electrical length of the subscriber line s (11, 12, 13) between the subscriber modems (14, 15, 16) and associated switch modems (5, 6, 7) of the subscriber access network (1),
   - ascertainment of the associated maximum transmission power for each frequency subband, SB, by the subscriber modem (14, 15, 16) from the transmitted configuration data such that far-end crosstalk, FEXT, between the subscriber line s (11, 12, 13) is minimized.

8. Subscriber modem according to one of the preceding claims,
**characterized in that** is set up to use the selected transmission frequency band, ÜFB, of further subscriber modems of the subscriber access network (1) for data transmission via associated subscriber line s.

**9.** Subscriber modem according to one of the preceding claims,
**characterized in that** the subscriber modem (14, 15, 16) is an FDD modem in each case.

**10.** Subscriber modem according to one of the preceding claims,
**characterized in that** the subscriber modem is set up to transmit the configuration data of the subscriber access network (1) via a prescribed control channel in a particular control channel frequency band.

**Revendications**

**1.** Modem d'abonné (14, 15, 16),
réalisé de manière séparée pour un type de fonctionnement mono-porteuse,
conçu pour se connecter à un réseau de modem d'abonné (1) qui comprend un modem d'opérateur (5, 6, 7) et est en outre conçu pour mettre en oeuvre un procédé de transmission de données d'émission par l'intermédiaire du modem d'abonné (14, 15, 16) avec une puissance d'émission adaptée, dans lequel le procédé comprend les étapes consistant à :

(a) sélectionner (S1) au moins une bande de fréquences de transmission UFB ;
(b) subdiviser (S2) la bande de fréquences de transmission sélectionnée, UFB, en plusieurs sous-bandes de fréquences, SB ;
(c) déterminer (S3) la puissance d'émission maximale correspondant à chaque sous-bande de fréquences, SB ;
(d) émettre (S5, S6) les données d'émission avec une puissance d'émission adaptée depuis le modem d'abonné (14, 15, 16) par l'intermédiaire d'une ligne de connexion d'abonné correspondante (11, 12, 13) vers le modem d'opérateur (5, 6, 7),

dans lequel les données d'émission sont transmises (S5) dans toutes les sous-bandes de fréquences avec une puissance d'émission unitaire sélectionnée parmi les puissances d'émission maximales déterminées,
dans lequel le modem d'abonné est conçu pour sélectionner la puissance d'émission la plus faible parmi les puissances d'émission maximales déterminées des sous-bandes de fréquences, SB, en tant que puissance d'émission unitaire.

**2.** Modem d'abonné (14, 15, 16),
réalisé de manière séparée pour un mode de fonctionnement multi-porteuse,
conçu pour se connecter à un réseau de modem d'abonné (1) qui comprend un modem d'opérateur (5, 6, 7) et qui est en outre conçu pour mettre en oeuvre un procédé de transmission de données d'émission par l'intermédiaire du modem d'abonné (14, 15, 16) avec une puissance d'émission adaptée, dans lequel le procédé comprend les étapes consistant à :

(a) sélectionner (S1) au moins une bande de fréquences de transmission, UFB ;
(b) subdiviser (S2) la bande de fréquences de transmission sélectionnée, UFB, en plusieurs sous-bandes de fréquences, SB ;
(c) déterminer (S3) la puissance d'émission maximale correspondant à chaque sous-bande de fréquences, SB ;
(d) émettre (S5, S6) les données d'émission avec une puissance d'émission adaptée depuis le modem d'abonné (14, 15, 16) par l'intermédiaire d'une ligne de connexion d'abonné correspondante (11, 12, 13) vers le modem d'opérateur (5, 6, 7),

dans lequel les données d'émission sont respectivement transmises (S6) dans les sous-bandes de fréquences avec la puissance d'émission maximale correspondante déterminée.

**3.** Modem d'abonné selon la revendication 2, **caractérisé en ce que** le modem d'abonné est respectivement un modem VDSL.

**4.** Modem d'abonné selon l'une quelconque des revendications 2 et 3,
**caractérisé en ce que** le modem d'abonné est conçu pour l'utilisation d'une bande de fréquences de canal de retour d'un système de transmission de données xDSL en tant que bande de fréquences de transmission, UFB.

**5.** Modem d'abonné selon l'une quelconque des revendications 2 à 4,
**caractérisé en ce que** le modem d'abonné est conçu pour l'utilisation d'une bande de fréquences de canal aller d'un système de transmission de données xDSL en tant que bande de fréquences de transmission, UFB.

**6.** Modem d'abonné selon l'une quelconque des revendications précédentes, **caractérisé en ce que** le modem d'abonné est conçu pour déterminer la puissance d'émission maximale des sous-bandes de fréquences, SB, en fonction de la longueur ou de la longueur électrique de la ligne de connexion d'abonné (11, 12, 13) entre le modem d'abonné (14, 15, 16) et le modem d'opérateur (5, 6, 7).

**7.** Modem d'abonné selon l'une quelconque des revendications précédentes, **caractérisé en ce que** le modem d'abonné est conçu de manière à ce que la détermination la puissance d'émission maximale correspondant à chaque sous-bande de fréquences, SB, consiste à :

- recevoir des données de configuration du réseau de connexion d'abonné (1), lesquelles données sont générées en fonction de rapports signal à bruit ou de la puissance de réception et indiquent la longueur ou la longueur électrique des lignes de connexion d'abonnés (11, 12, 13) entre les modems d'abonnés (14, 15, 16) et des modems d'opérateur correspondants (5, 6, 7) du réseau de connexion d'abonné (1),
- déterminer la puissance d'émission maximale correspondante pour chaque sous-bande de fréquences, SB, par l'intermédiaire du modem d'abonné (14, 15, 16) à partir des données de configuration transmises, de manière à ce que la diaphonie d'extrémité distante, FEXT, entre les lignes de connexion d'abonné (11, 12, 13) soit minimisée.

8. Modem d'abonné selon l'une quelconque des revendications précédentes, **caractérisé en ce qu'**est conçu pour l'utilisation de la bande de fréquences de transmission sélectionnée, UFB, d'autres modems d'abonnés du réseau de connexion d'abonné (1) afin de transmettre des données par l'intermédiaire de lignes de connexion d'abonnés correspondantes.

9. Modem d'abonné selon l'une quelconque des revendications précédentes, **caractérisé en ce que** le modem d'abonné (14, 15, 16) est respectivement un modem FDD.

10. Modem d'abonné selon l'une quelconque des revendications précédentes, **caractérisé en ce que** le modem d'abonné est conçu pour transmettre les données de configuration du réseau de connexion d'abonné (1) par l'intermédiaire d'un anal de commande prédéterminé dans une bande de fréquences de canal de commande déterminée.

## FIG 1a

Vermittlungsstelle

MUX

$VM_n$    $AL_n$    $TM_n$

Fernübersprechen

Nahübersprechen

$VM_e$    $AL_e$    $TM_e$

Kabelbündel

## FIG 1b

MUX A

VM    $AL_{1e}$    $TM_e$

VM    $AL_{1n}$    $TM_n$

MUX B

VM    $AL_{2e}$    $TM_e$

VM    $AL_{2n}$    $TM_n$

Kabelbündel

# FIG 2a

Übertragungsfrequenzband

PSD

bei TM$_e$

$TM_e,tx$

$TM_n,tx$

PSD

bei TM$_e$

$TM_e,tx,att$

PSD

bei Vermittlung stelle

$TM_n,rx,att$

FEXT

$TM_e,rx,att$

f

# FIG 2b

$TM_e,tx$

$TM_n,tx$

$TM_e,tx,att$

$TM_n,rx,att$

$TM_e,rx,att$

f

EP 1 802 067 B1

FIG 3

EP 1 802 067 B1

# FIG 4

```
                    ┌─────────────────┐
                    │      Start      │ ⌐ S0
                    └─────────────────┘
                             │
                             ▼
                    ┌─────────────────┐
                    │   Selektieren   │ ⌐ S1
                    └─────────────────┘
                             │
                             ▼
                    ┌─────────────────┐
                    │ Unterteilen in SFB │ ⌐ S2
                    └─────────────────┘
                             │
                             ▼
                    ┌─────────────────┐
                    │    Ermitteln    │ ⌐ S3
                    │    PSD max      │
                    └─────────────────┘
                             │
                             ▼
   Einträgerbetriebsart ◁────┤  Betriebsart  ├────▷ Vielträgerbetriebsart
                    │         S4                      │
                    ▼                                 ▼
      ┌─────────────────┐              ┌─────────────────┐
      │ Sende mit einheitlicher │ ⌐ S5    S6 ⌐ │ Sende mit ermittelter │
      │    Sendeleistung    │              │    Sendeleistung    │
      └─────────────────┘              │      PSD max        │
                    │                  └─────────────────┘
                    │                            │
                    └──────────────┬─────────────┘
                                   ▼
                          ┌─────────────────┐
                          │       Stop      │ ⌐ S7
                          └─────────────────┘
```

14

## FIG 5a

$\Delta f_A$

$\Delta f_B$

$\Delta f_C$

ÜFB$_A$

ÜFB$_B$

ÜFB$_C$

f

## FIG 5b

$\Delta fi$

$\Delta fi$

PSD

PSD$_{SBB2}$

PSD$_{SBA1}$

f

SB$_{A1}$

SB$_{A4}$

SB$_{B1}$

SB$_{B5}$

SB$_{A2}$ SB$_{A3}$

SB$_{B2}$ SB$_{B4}$

SB$_{B3}$

## FIG 5c

PSD-Sende

PSD$_{SBB2}$

PSD$_{SBA1}$

Einträgerbetriebsart

f

## FIG 5d

PSD-Sende

Vielträgerbetriebsart

f

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9933215 A